## Europäisches Patentamt

## European Patent Office

## Office européen des brevets

(11) Numéro de publication: **0 239 451
B1**

(12) **FASCICULE DE BREVET EUROPEEN**

(19)

(45) Date de publication du fascicule du brevet:
**07.11.90**

(21) Numéro de dépôt: **87400432.8**

(22) Date de dépôt: **26.02.87**

(51) Int. Cl.⁵: **F16K 15/02**, F16K 47/02,
F16K 1/12

(54) **Ensemble de clapet anti-retour, notamment pour réacteur à eau pressurisée.**

(30) Priorité: **07.03.86 FR 8603273**

(43) Date de publication de la demande:
**30.09.87 Bulletin 87/40**

(45) Mention de la délivrance du brevet:
**07.11.90 Bulletin 90/45**

(84) Etats contractants désignés:
**BE CH DE ES FR GB IT LI NL SE**

(56) Documents cités:
**DE-A- 3 427 131
DE-C- 59 580
FR-A- 2 321 081
FR-A- 2 400 157
GB-A- 2 011 033
US-A- 1 356 238
US-A- 2 490 511
US-A- 2 693 931**

(73) Titulaire: **ELECTRICITE DE FRANCE Service National, 2, rue Louis Murat, F-75008 Paris(FR)**

(72) Inventeur: **Panet, Michel, 1, résidence Bernard Palissy, F-77210 Avon(FR)**
Inventeur: **Martin, Roger, 7, rue Vidal, F-07100 Annonay(FR)**

(74) Mandataire: **Moncheny, Michel et al, c/o Cabinet Lavoix 2 Place d'Estienne d'Orves, F-75441 Paris Cedex 09(FR)**

ACTORUM AG

## Description

La présente invention est relative aux ensembles de clapet anti-retour destinés, notamment, à équiper des circuits d'un réacteur nucléaire à eau pressurisée.

On connaît un premier type de clapet anti-retour dans lequel un obturateur léger en polyuréthanne est monté coulissant axialement dans un corps de clapet de façon à coopérer avec un siège fixe quand l'écoulement du liquide du circuit dans lequel ce clapet est installé s'inverse, c'est-à-dire circule d'aval en amont. Ce type de clapet présente notamment l'inconvénient d'être fragile dans des conditions de températures élevées.

Dans un autre type de clapet anti-retour connu, l'obturateur se présente sous la forme d'un volet articulé sur un axe qui est disposé transversalement à la direction d'écoulement du fluide dans le circuit et qui traverse la paroi du clapet pour être relié à l'extérieur de ce dernier à un dispositif de freinage hydraulique destiné à ralentir le mouvement de fermeture de l'obturateur quand celui-ci pivote en direction du siège auquel il est associé. Cependant, un tel clapet ne permet pas d'éliminer dans tous les cas les surpressions au moment de sa fermeture et le fait qu'il soit prévu des moyens de freinage à l'extérieur de ce clapet pose des problèmes d'étanchéité au niveau de la traversée de la paroi du corps de clapet par l'axe.

On connaît enfin un autre clapet également du type comportant un obturateur réalisé sous la forme d'un volet articulé autour d'un axe transversal, associé à un dispositif de freinage du type à piston et cylindre logé à l'intérieur du corps du clapet. Ce dispositif de freinage comprend un cylindre solidaire du corps de clapet et un piston actionné par l'obturateur quand ce dernier se déplace vers sa position fermée afin de le freiner par laminage du fluide qui s'échappe du cylindre sous la pression exercée par le piston.

Des moyens d'évacuations rapide du fluide à l'extérieur du cylindre sont en outre prévus pour que, lorsque l'obturateur se déplace de sa position ouverte vers sa positon fermée, il subisse dans un premier temps un freinage modéré, le fluide présent dans le cylindre s'échappant alors par les moyens d'évacuation rapide, puis, dans un deuxième temps, un freinage important dans la mesure où à ce stade les moyens d'évacuation rapide étant bouchés par le piston, le fluide présent dans le cylindre ne puisse plus s'échapper que par un trajet de fuite de faible section. Dans un tel agencement, le volet d'obturation est massif et lourd de sorte qu'il acquiert une énergie cinétique importante lors de son déplacement et de ce fait les moyens de freinage hydraulique ne présentent pas l'efficacité souhaitée. Il apparait en outre que les coups de bélier ne sont pas atténués avec un tel clapet.

Un état de la technique est, par exemple, illustré par le document DE-A3 4 27 131. Ce document, qui concerne une vanne anti-retour avec dispositif de freinage, a une structure et un fonctionnement qui sont bien particuliers.

L'invention a pour but de remédier à ces divers inconvénients en fournissant un ensemble de clapet anti-retour qui soit fiable et qui permette de supprimer efficacement les coups de bélier dans le circuit dans lequel il est installé, au moment où la circulation du fluide s'inverse pour être orientée d'aval en amont.

A cet effet, l'invention a pour objet un ensemble de clapet anti-retour dont les éléments connus par ce document allemand figurent dans le préambule de la revendication principale et dont les particularités sont exposées, notamment dans la partie caractérisante de celle-ci.

Suivant d'autres caractéristiques:

- après une course déterminée vers sa position de fermeture, à partir de sa positon d'ouverture, l'obturateur coopère avec lesdits moyens pour réduire progressivement la section de passage de ces derniers;
- lesdits moyens de comprennent une pièce rapportée et fixée dans le corps, comportant une paroi à peu près axiale plus proche du siège et dans laquelle sont ménagés des orifices décalés axialement, et une paroi radiale munie également d'orifices et plus éloignée du siège, ces orifices communiquant à travers une chambre ;
- le piston est solidaire du corps et le cylindre est délimité par l'obturateur ;
- le cylindre délimite un trajet de fuite à relativement faible perte de charge, pour le fluide chassé lors d'un déplacement de l'obturateur vers sa position de fermeture, ce trajet étant obturé après une autre course déterminée de l'obturateur à partir de sa position d'ouverture.

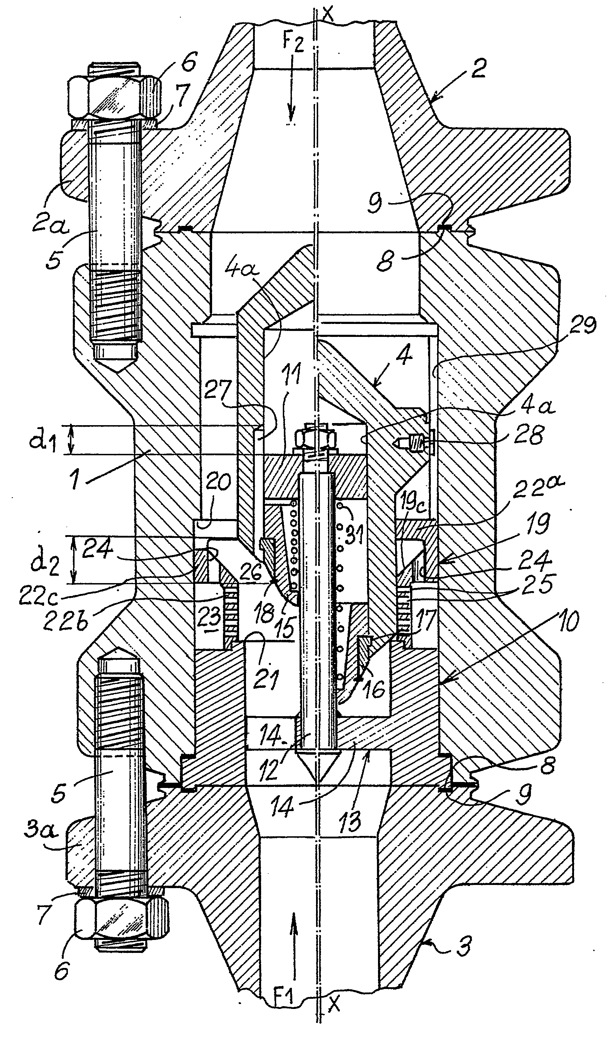

L'invention sera mieux comprise à la lecture de la description qui va suivre d'un exemple de réalisation, faite en référence au dessin annexé, sur lequel :

La Figure unique est une vue en coupe axiale partielle d'un ensemble de clapet anti-retour conforme à l'invention, illustrant dans la partie située à droite de l'axe, l'ensemble de clapet en position fermée et dans la partie située à gauche, cet ensemble en position à peu près complètement ouverte.

L'ensemble de clapet anti-retour représenté sur la Figure, est destiné en particulier à être incorporé dans un circuit d'eau pressurisée d'un réacteur nucléaire.

Cet ensemble comprend un corps tubulaire (corps creux) 1 délimitant un logement cylindrique relié à chacune de ses extrémités à un tronçon de canalisation 2, 3, respectivement aval et amont et dans lequel un obturateur 4 est monté coulissant.

La fixation du corps 1 entre les deux tronçons 2, 3 est réalisée de façon classique par des brides 2a, 3a et des ensembles à goujon 5, écrou 6 et rondelle 7. L'étanchéité du raccordement est assurée par un joint annulaire plat 8, par exemple en graphite expansé, d'environ 1 mm d'épaisseur, pressé contre le fond d'une gorge annulaire ménagée dans la face d'extrémité du tronçon correspondant par une nervure annulaire complémentaire 9 formée respectivement sur la face d'extrémité aval du corps 1.

L'obturateur 4 présente à peu près la forme d'un cylindre creux 4aà extrémités ogivales, monté coulissant avec un faible jeu sur un piston 11 fixé à l'extrémité aval d'une tige 12.

La tige 12 traverse axialement l'extrémité amont de l'obturateur dans laquelle elle coulisse et est fixée à son extrémité amont au centre d'un disque ajouré 13, venu de matière avec le manchon 10 et formé par plusieurs bras radiaux 14.

L'extrémité amont de l'obturateur 4 est fermée par une douille 15 et une bague 16 en deux parties qui forment ensemble une partie de l'extrémité amont ogivale proprement dite de l'obturateur. La douille 15 est emmanchée dans ce dernier et montée coulissante sur la tige 12. Les deux parties de la bague 16 sont reçues dans un espace annulaire ménagé entre la douille 15 et le corps de l'obturateur 4, cette bague 16 étant munie d'un épaulement annulaire 17 orienté radialement vers l'extérieur et reçu dans une gorge complémentaire formée sur la périphérie intérieure du corps de l'obturateur, de façon à empêcher tout déplacement axial de la douille 15 vers la partie amont de l'ensemble de clapet. De plus, le coulissement de cette dernière dans la direction aval est empêché par la présence d'un anneau de retenue élastique 18, inséré dans une gorge formée sur la périphérie extérieure de la douille 15 et en butée axiale contre la bague 16.

Par ailleurs, l'obturateur 4 qui présente un diamètre inférieur à celui du logement du corps 1 de l'ensemble de clapet, est monté coulissant dans un organe annulaire (pièce) 19 emmanché dans le corps 1 et calé axialement, d'une part, dans la direction aval, par un épaulement 20 formé sur la périphérie intérieure du corps 1, d'autre part, dans la direction amont, par le manchon 10 qui présente un diamètre intérieur légèrement inférieur à celui de l'organe annulaire 19 de façon à délimiter un siège 21 pour l'obturateur 4 en position fermée de l'ensemble de clapet (partie droite de la Figure).

L'organe annulaire 19 comporte à son extrémité aval, plusieurs pattes 22a espacées circonférentiellement et orientées radialement vers l'intérieur pour guider le coulissement de l'obturateur 4. Ces pattes 22 se raccordent axialement sur une partie annulaire présentant en coupe axiale, à peu près la forme d'un L qui délimite entre sa paroi axiale 22b, sa paroi radiale 22c, le manchon 10 et la périphérie intérieure du corps 1, une chambre annulaire 23 communiquant avec l'intérieur du corps 1, d'une part, à l'aide d'alésages 24 ménagés dans la paroi radiale 2c et, d'autre part, à l'aide d'orifices 25 à peu près radiaux ménagés dans la paroi 22b de la chambre 23 et répartis axialement sur plusieurs rangées. Les alésages 24 et les orifices 25 offrent une section de passage réduite par rapport à la section de passage normale de sorte qu'un fluide circulant uniquement à travers ces derniers subit une perte de charge élevée. Le passage normal pour ce fluide est constitué par un espace annulaire 26 ménagé entre l'extrémité amont de l'obturateur 4 et une partie tronconique 19a de l'organe annulaire 19.

La diamètre externe de l'obturateur 4 est légèrement inférieur au diamètre interne de l'organe annulaire 19 pour permettre le déplacement axial, avec un léger jeu, de l'obturateur entre ses deux positions représentées au dessin.

L'obturateur comporte dans sa paroi interne des rainures 27 à peu près axiales, espacées circonférentiellement, qui débouchent à l'extrémité amont de l'obturateur. Ces rainures 27 sont destinées à permettre une évacuation rapide du fluide présent dans l'obturateur, qui est chassé par le coulissement de ce dernier sur le piston 11. Les rainures 27 ont de plus une longueur telle, qu'elles ne communiquent plus avec le volume interne lorsque l'espace annulaire 26 est fermé par l'obturateur 4.

Un pion 28 guidé dans une rainure axiale 29 du corps 1 assure le calage angulaire de l'obturateur.

Un ressort hélicoïdal 31 entourant la tige 12 est comprimé entre le piston 11 et la douille 15, pour solliciter l'obturateur 4 vers sa position de fermeture. De plus, des moyens sont prévus entre l'obturateur et une partie fixe qui peut être soit le piston, soit le corps, pour limiter le débattement du piston dans le sens de l'ouverture du clapet. Ces moyens peuvent par exemple être constitués par le ressort 31 qui, en position comprimée, est à spires jointives et limite donc le déplacement de l'obturateur vers l'aval, c'est-à-dire dans le sens de la flèche F1.

Le fonctionnement de ce clapet est le suivant :

En fonctionnement normal, c'est-à-dire lorsque le fluide circule d'amont en aval dans le sens de la flèche F1, la force exercée par la pression du fluide maintient l'obturateur dans sa position ouverte représentée sur la partie gauche du dessin. Le fluide circule alors avec une faible perte de charge en passant successivement entre les bras 14 du disque 13, à travers l'espace annulaire 26, entre les pattes radiales 22a de l'organe 19, et entre les surfaces cylindriques en regard de l'obturateur et du corps.

Si une surpression se produit en aval du clapet, le fluide tend à circuler dans la canalisation suivant la flèche F2, c'est-à-dire de l'aval vers l'amont en considérant la direction normale de circulation. L'obturateur se déplace alors en direction de son siège 21 et ce déplacement a deux conséquences : tout d'abord le déplacement relatif de l'obturateur et du piston 11 provoque l'échappement du fluide contenu dans la chambre 4a délimitée par l'obturateur et le piston. Dans un premier temps ce refoulement s'effectue à travers les passages 27 de relativement large section et le freinage de l'obturateur est donc limité. Ce dernier se déplace donc relativement rapidement vers son siège. Après une course d1 de l'obturateur, les passages 27 sont obturés et le refoulement du fluide s'effectue par laminage à travers le jeu faible délimité entre le piston 11 et l'alésage interne de l'obturateur. L'obturateur se déplace alors plus lentement.

La deuxième conséquence du déplacement axial de l'obturateur est la réduction progressive de la section libre dans la zone 26, de sorte qu'après une course d2 de l'obturateur, ce dernier masque entièrement le passage 26 et que le trajet obligatoire du fluide passe par les alésages 24, la chambre 23 et les orifices 25. De préférence, la distance d2 est supérieure à la distance d1.

Le déplacement de l'oburateur dans le sens de la flèche F2 se poursuivant, la partie inférieure de cet obturateur masque progressivement un nombre croissant d'orifices 25, limitant ainsi la section de passage libre pour le fluide, et ce jusqu'à parvenir à la position de fermeture représentée sur la partie droite du dessin.

On réalise ainsi un couplage entre la vitesse de l'écoulement dans le sens inverse, c'est-à-dire dans le sens de la flèche F2, et la position de l'obturateur, pendant la phase de fermeture du clapet. Dans un premier temps le débit inverse peut être relativement important, mais alors l'obturateur se déplace rapidement vers sa position de fermeture. Puis, ce débit décroît progressivement alors que l'obturateur est lui-même soumis à un freinage plus efficace dû au laminage du fluide entre le piston 11 et le cylindre 4a. Un tel couplage permet précisément d'éviter les coups de bélier dans la canalisation.

On notera par ailleurs que les moyens mis en jeu sont particulièrement fiables et que l'obturateur est guidé de façon très efficace, pour la tige 12 et le piston 11, ainsi que par les pattes 22a.

En variante, les rainures 27 peuvent avoir une section progressivement décroissante en direction du fond du cylindre pour obtenir une loi de freinage de l'obturateur, choisie par l'utilisateur.

**Revendications**

1. Ensemble de clapet anti-retour comprenant un corps (1) creux relié à chacune de ses extrémités à un tronçon de canalisation (2, 3) particulier, un siège (21) d'obturateurs prévu à l'intérieur du corps (1), un obturateur (4) placé à l'intérieur du corps (1) et monté mobile coulissant en translation axiale entre une position ouverte dans laquelle un fluide est susceptible de pouvoir circuler dans un premier sens et une position fermée dans laquelle l'obturateur (4) repose sur le siège (21) pour couper toute circulation de ce fluide dans un second sens opposé au premier, des moyens de freinage comprenant entre autres un piston (11, 12) et un cylindre (4a) et coopérant avec l'obturateur (4) pour freiner le déplacement de ce dernier initialement avec une action de freinage insignifiante et ensuite avec une action de freinage supérieure quand l'obturateur se déplace de sa position ouverte vers sa position fermée sous l'effet d'une inversion du sens de l'écoulement du fluide dans le corps (1), le piston et le cylindre sont associés les uns à l'obturateur (4) et les autres au corps (1) et où un courant principal de fluide circule dans ce premier sens sans perte de charge notable, caractérisé en ce que le corps (1) est tubulaire et le piston est solidaire du corps (1) et en ce que le corps (1) comporte disposés immédiatement en aval du siège (21) dans le premier sens de circulation du fluide des autres moyens de freinage (19, 24, 25) qui sont disposés séparément de l'ensemble dudit piston et dudit cylindre et qui définissent un courant secondaire de fluide à perte de charge relativement élevée pour le fluide circulant dans ce second sens dans le corps (1) lorsque l'obturateur (4) se déplace vers sa position fermée.

2. Ensemble de clapet suivant la revendication 1, caractérisé en ce que le cylindre délimite un trajet de fuite à relativement faible perte de charge, pour le fluide chassé lors d'un déplacement de l'obturateur (4) vers sa position de fermeture, ce trajet de fuite étant obturé après une course déterminée (d₁) de l'obturateur à partir de sa position d'ouverture.

3. Ensemble de clapet suivant la revendication 2, caractérisé en ce que ledit trajet de fuite est constitué par des rainures longitudinales (27) ménagées dans la paroi du cylindre.

4. Ensemble de clapet suivant l'une quelconque des revendications 1 et 2, caractérisé en ce que l'obturateur (4) coopère avec les autres moyens de freinage (19, 24, 25) après une course (d₂) à partir de sa position d'ouverture et en ce que ladite course (d₂) est supérieure à ladite course déterminée (d₁).

5. Ensemble de clapet suivant la revendication 1, caractérisé en ce que lesdits autres moyens de freinage comprennent une pièce (19) rapportée et fixée dans le corps (1), comportant une paroi axiale (22b) plus proche du siège (21) et dans laquelle sont ménagés des orifices (25) décalés axialement, et une paroi radiale (22c) munie également d'orifices (24) et plus éloignée du siège (21), ces orifices (24, 25) communiquant à travers une chambre (23).

6. Ensemble de clapet suivant la revendication 5, caractérisé en ce que ladite pièce (19) comporte de plus, dans sa partie la plus éloignée du siège (21) des pattes radiales (22a) assurant le guidage de l'obturateur (4).

7. Ensemble de clapet suivant la revendication 1, caractérisé en ce que le piston (11) est porté par une tige (12) et l'obturateur (4) comporte à sont extrémité amont des moyens de guidage coopérant avec ladite tige.

**Claims**

1. Check-valve assembly comprising a hollow body (1) connected at each of its ends to a pipe section (2, 3), a seat (21) for closure members within the body (1), a closure member (4) within the body (1) and mounted so as to slide in axial translation between an open position in which a fluid is able to flow in a first direction and a closed position in which the closure member (4) rests on the seat (21) in order to interrupt any flow of said fluid in a second direction opposite to the first, restraining means inter alia comprising a piston (11, 12) and a cylinder (4a) and cooperating with the closure member (4) to restrain the displacement of the latter initially with an insignificant restraining action and then with a greater restraining action when the closure member moves from its open position to its closed position under the effect of a reversal of the fluid flow direction in the body (1), the piston and the cylinder being associated on the one hand with the closure member (4) and on the other with the body (1) and in which a main fluid flow flows in said first direction without any significant pressure loss, characterized in that the body (1) is tubular and the piston is integral with the body and in that the body (1) has immediately downstream of the seat (21) in the first fluid flow direction other restraining means (19, 24, 25) arranged separately of the assembly of said piston and said cylinder and which define a secondary fluid flow with a relatively high pressure loss for the fluid flowing in said second direction in the body (1) when the closure member (4) moves to its closed position.

2. Check-valve according to claim 1, characterized in that the cylinder defines an escape path with a relatively small pressure drop for the fluid expelled upon a displacement of the closure member (4) towards its closure position, said escape path being closed after a predetermined travel ($d_1$) of the closure member from its open position.

3. Check-valve assembly according to claim 2, characterized in that said escape path is constituted by longitudinal grooves (27) in the cylinder wall.

4. Check-valve assembly according to either of the claims 1 and 2, characterized in that the closure member (4) cooperates with the other restraining means (19, 24, 25) after a travel ($d_2$) from its open position and in that said travel ($d_2$) exceeds said predetermined travel ($d_1$).

5. Check-valve assembly according to claim 1, characterized in that said other restraining means comprise a member (19) added and fixed to the body (1), including an axial wall (22b) closer to the seat (21) and in which are provided axially displaced orifices (25) and a radial wall (22c) which is also provided with orifices (24) and which is further from the seat (21), said orifices (24, 25) communicating through a chamber (23).

6. Check-valve assembly according to claim 5, characterized in that said member (19) is also provided in its part furthest from the seat (21) with radial feet (22a) ensuring the guidance of the closure member (4).

7. Check-valve assembly according to claim 1, characterized in that the piston (11) is carried by a rod (12) and the closure member (4) has at its upstream end guidance means cooperating with said rod.

**Patentansprüche**

1. Rückschlagventil mit einem hohlen Gehäuse (1), das an jedem Ende mit einem speziellen Rohrleitungsendstück (2, 3) verbunden ist, und einem Ventilsitz (21) im Innern des Gehäuses (1), einem Ventil (4), das im Innern des Gehäuses (1) axial beweglich zwischen einer offenen Stellung, in der ein Fluid in einer ersten Richtung umlaufen kann, und einer Schließstellung, in der das Ventil (4) auf dem Sitz (21) aufliegt, um den gesamten Fluid-Umlauf in einer zweiten, zur ersten entgegengesetzten Richtung zu unterbrechen, Drosselmitteln mit u.a. einem Kolben (11, 12) und einem Zylinder (4a), die mit dem Ventil (4) zusammenarbeiten, um dessen Versetzen zu Beginn mit einer geringfügigen und danach mit einer höheren Drosselwirkung zu verzögern, wenn das Ventil unter der Wirkung einer Richtungsumkehr des Fluidflusses im Gehäuse (1) von seiner offenen in seine Schließstellung versetzt wird, wobei Kolben und Zylinder einerseits mit dem Ventil (4) und andererseits mit dem Gehäuse (1) verbunden sind, und wo ein Primär-Fluidstrom in der ersten Richtung ohne bemerkenswerten Lastverlust umläuft, dadurch gekennzeichnet, daß das Gehäuse (1) rohrförmig und der Kolben fest mit ihm verbunden ist und daß das Gehäuse (1) unmittelbar unterhalb vom Sitz (21) in der ersten Fluid-Umlaufrichtung andere Drosselmittel (19, 24, 25) aufweist, die getrennt von der Kolben-Zylinder-Einheit angeordnet sind und die einen Sekundär-Fluidstrom mit relativ hohem Lastverlust für das Fluid charakterisieren, das in der zweiten Richtung im Gehäuse umläuft, bis das Ventil (4) sich in seine Schließstellung verstellt.

2. Rückschlagventil nach Anspruch 1, dadurch gekennzeichnet, daß der Zylinder eine Überströmpassage mit relativ geringem Lastverlust für das während eines Versetzens des Ventils (4) gegen seine Schließstellung gedrängte Fluid abgrenzt, wobei diese Überströmungspassage von ihrer Anfangsstellung an nach einem festgelegten Weg ($d_1$) des Ventils verschlossen wird.

3. Rückschlagventil nach Anspruch 2, dadurch gekennzeichnet, daß die Überströmpassage durch Längsnuten (27) in der Zylinderwand gebildet wird.

4. Rückschlagventil nach Anspruch 1 oder 2, dadurch gekennzeichnet, daß das Ventil (4) mit anderen Drosselmitteln (19, 24, 25) auf einem Weg ($d_2$) von seiner Anfangsstellung an zusammenwirkt und daß dieser Weg ($d_2$) größer ist als der festgelegte Weg ($d_1$).

5. Rückschlagventil nach Anspruch 1, dadurch gekennzeichnet, daß die anderen Drosselmittel ein Teil (19) aufweisen, das zusammengesetzt und im Gehäuse (1) fest angebracht ist, mit einer axialen Wand (22b), die näher am Ventilsitz (21) ist und in der axial versetzt angeordnete Öffnungen (25) angebracht sind, und einer radialen Wand (22c), die ebenfalls mit Öffnungen (24) versehen und weiter vom Ventilsitz entfernt ist, wobei diese Öffnungen (24, 25) in Querverbindung mit einer Kammer (23) stehen.

6. Rückschlagventil nach Anspruch 5, dadurch gekennzeichnet, daß das Teil (19) weiterhin an seinem dem Ventilsitz (21) entfernteren Abschnitt radiale Klauen (22a) aufweist, die die Führung des Ventils (4) sichern.

7. Rückschlagventil nach Anspruch 1, dadurch gekennzeichnet, daß der Kolben (11) von einem Schaft (12) getragen wird und das Ventil (4) an seinem stromaufwärts gerichteten Ende Führungsmittel aufweist, die mit dem Schaft zusammenwirken.